# EUROPÄISCHE PATENTSCHRIFT

(11) **EP 2 419 981 B1**
(45) Veröffentlichungstag und Bekanntmachung des Hinweises auf die Patenterteilung: **17.12.2014**
(21) Anmeldenummer: 10714263.0
(22) Anmeldetag: 15.04.2010
(51) Int. Cl.: H02G 11/00

(54) **FÜHRUNGSRINNE**
GUIDE CONDUIT
CONDUIT DE GUIDAGE

(30) Priorität: 16.04.2009 DE 202009005547 U
(43) Veröffentlichungstag der Anmeldung: 22.02.2012
(73) Patentinhaber: Igus GmbH, 51147 Köln (DE)
(72) Erfinder: JAEKER, Thilo-Alexander, 53757 Sankt Augustin (DE); NEHRING, Harald, 53229 Bonn (DE)
(74) Vertreter: Lippert, Hans-Joachim
(86) Internationale Anmeldenummer: PCT/EP2010/054984
(87) Internationale Veröffentlichungsnummer: WO 2010/119106

(56) Entgegenhaltungen:
- WO-A1-2006/066812
- DE-A1- 2 362 463
- DE-A1- 3 525 332
- DE-U1-202007 005 478
- US-A- 4 129 277

## Beschreibung

Die Erfindung betrifft eine Führungsrinne für eine Leitungsaufnahmeeinrichtung, die sich zwischen einer stationären und einer beweglichen Anschlussstelle erstreckt und aus einem mit der stationären Anschlussstelle verbindbaren unteren Trum und einem mit der beweglichen Anschlussstelle verbindbaren oberen Trum, die durch einen Umlenkbogen miteinander verbunden sind, besteht, wobei die Führungsrinne zwei gegenüberliegende vertikal feststehende Seitenwände mit innen liegenden Seitenflächen zur Anlage seitlicher Bereiche der beiden Trume aufweist und an den gegenüberliegenden Seitenwänden jeweils mindestens eine Abstützvorrichtung zur Abstützung und Führung des oberen Trums angeordnet ist, die zwischen einer ersten Position, in der sie gegenüber der Seitenfläche ins Innere der Führungsrinne vorsteht und als Abstützung des oberen Trums wirkt, und einer zweiten Position, in der sie nicht wesentlich über die innere Seitenfläche der betreffenden Seitenwand vorsteht und nicht als Abstützung des oberen Trums wirkt, bewegbar ist, und eine in den Verfahrweg der Leitungsaufnahmeeinrichtung hinein bewegbare Schaltvorrichtung in Form eines Körpers vorgesehen ist, der an einem Schwenkarm außerhalb der inneren Seitenfläche der betreffenden Seitenwand schwenkbar gelagert ist und an seinen beiden in Längsrichtung der Führungsrinne weisenden Seiten vom Inneren der Führungsrinne nach außen hin verbreitert ist und der durch Kontakt dieser Seiten mit innen und außen liegenden Bereichen des Umlenkbogens der Leitungsaufnahmeeinrichtung in eine Position bewegbar ist, in der er nicht wesentlich über die innere Seitenfläche der betreffenden Seitenwand vorsteht und die weitere Verfahrbewegung der Leitungsaufnahmeeinrichtung nicht behindert, und mit der Abstützvorrichtung so gekoppelt ist, dass diese von einer der beiden Positionen in die andere bewegbar ist.

Bei den durch eine solche Führungsrinne zu führenden Leitungsaufnahmeeinrichtungen kann es sich zum Beispiel um Energieführungsketten zur Aufnahme von Kabeln, Schläuchen oder biegsamen Rohren handeln, bei denen benachbarte Glieder gelenkig miteinander verbunden sind, Bandketten, bei denen Glieder über ein biegsames Band miteinander verbunden sind, oder andere in mindestens einer Ebene abwinkelbare Einrichtungen zur Aufnahme von Leitungen.

Derartige Führungsrinnen sind in verschiedenen Ausführungen bekannt. Sie werden bei längeren Verfahrwegen zum Beispiel in horizontaler oder vertikaler Richtung eingesetzt. Sie unterstützen bei horizontaler Verfahrweise den ruhigen und reibungsarmen Lauf der Leitungsaufnahmeeinrichtung. Hierzu legt sich das mit der stationären Anschlussstelle verbundene untere Trum auf dem Boden oder Ablegeschienen der Führungsrinne ab. Die Seitenwände der Führungsrinne sind mit einem geringen Spiel zu den Seitenbereichen der Leitungsaufnahmeeinrichtung angeordnet, so dass diese längs eines exakt linearen Verfahrwegs bewegt werden kann. Das obere Trum legt sich gewöhnlich nach einem kürzeren oder längeren freitragenden Verlauf im Anschluss an den Umlenkbogen auf das untere Trum ab und wird gleitend darauf geführt.

Soll sich das obere Trum nicht auf dem unteren Trum ablegen, z. B. wenn anfallender Schmutz oder anfallende Späne zu Verschleißerscheinungen beim Gleiten führen, muss es insbesondere bei längeren Verfahrwegen durch eine Führungsrinne unterstützt und ebenfalls seitlich geführt werden. Eine hierzu geeignete Führungsrinne ist Gegenstand der vorliegenden Erfindung.

Unter dem Begriff Führungsrinne wird nicht nur eine durchgehende, seitliche oder am Boden geschlossene Rinne verstanden. Es wird lediglich vorausgesetzt, dass es sich um eine Einrichtung handelt, die die Leitungsaufnahmeeinrichtung in mindestens zwei senkrecht zueinander verlaufenden Richtungen quer zur Längsrichtung der Leitungsführungseinrichtung unterstützt bzw. abstützt. Die Unter- bzw. Abstützung kann somit auch in beabstandeten Bereichen in Längsrichtung der Leitungsaufnahmeeinrichtung erfolgen, so dass die Führungsrinne zwischen diesen Bereichen offen oder unterbrochen sein kann.

Bekannte Führungsrinnen zur Abstützung eines mit vertikalem Abstand vom unteren Trum geführten oberen Trums sind mit einem relativ großen Aufwand verbunden, da das obere Trum nicht nur seitlich sondern auch an seiner Unterseite abgestützt werden muss, wobei die Abstützung der Unterseite so ausgelegt werden muss, dass sie die Durchführung des Umlenkbogens beim Hin- und Herbewegen der Leitungsaufnahmeeinrichtung nicht beeinträchtigt. Außerdem führt die Abstützung zu einer unerwünschten hohen Gleitreibung.

Eine Führungsrinne der eingangs genannten Art ist aus der DE 20 2007 005 478 U1 bekannt. Bei dieser Rinne sind die Abstützungsvorrichtung und die Schaltvorrichtung als Vorsprünge an den gegenüberliegenden Schenkeln einer Wippe ausgebildet, wobei die Vorsprünge der Wippe abwechselnd über die innere Seitenfläche der betreffenden Seitenwand ins Innere der Führungsrinne vorstehen. Die Vorsprünge sind in Form von in Richtung auf das Innere der Führungsrinne weisenden Halbkugeln ausgebildet, so dass sie durch in Längsrichtung der Führungsrinne erfolgenden Kontakt mit der Leitungsaufnahmeeinrichtung aus ihrer nach innen vorstehenden, ersten Position in ihre nicht nach innen vorstehende, zweite Position bewegbar sind, wenn der jeweils andere Vorsprung nicht durch die Leitungsaufnahmeeinrichtung kontaktiert ist.

Mit der aus der genannten Druckschrift bekannten Abstützvorrichtung wird das obere Trum der Leitungsaufnahmeeinrichtung an jeweils zwei gegenüberliegenden Stellen punktuell abgestützt und geführt. Insbesondere eignet sich eine solche Abstützvorrichtung für vertikal verfahrbare Leitungsaufnahmeeinrichtungen, bei denen Schwingungen des mit der beweglichen Anschlussstelle verbundenen Trums und ein Gegeneinanderschlagen der Trume vermieden werden sollen. Bei horizontal verfahrbaren und/ oder schwereren Leitungsaufnahmeeinrichtungen ist eine stabilere und sicherere Abstützung und Führung des oberen Trums wünschenswert.

Eine Abstützungsvorrichtung für das obere Trum einer Leitungsaufnahmeeinrichtung ist z. B. auch aus der DE 23 62 463 A1 bekannt. Der in dieser Druckschrift vorgeschlagene Wirkungsmechanismus zwischen den in Querrichtung verschwenkbaren, das obere Trum untergreifenden Greifarmen und den in die Bewegungsbahn der Leitungsaufnahmeeinrichtung hineinragenden Schaltkufen ist jedoch relativ kompliziert und kostenaufwändig. Zur seitlichen Führung des oberen Trums und des unteren Trums sind jeweils separate Wannenbereiche an einer Stützkonstruktion vorgesehen.

Eine Führungsrinne für eine Leitungsaufnahmeeinrichtung der eingangs genannten Art ist weiterhin in der US 4,129,277 A1 offenbart. Diese Vorrichtung weist L-förmige Träger mit einem langen Schenkel und einem kurzen Schenkel auf, die um eine Achse im Bereich des Übergangs zwischen den beiden Schenkeln quer zur Längsrichtung der Leitungsaufnahmeeinrichtung verschwenkbar angeordnet sind. An den freien Enden der langen Schenkel sind an der zu dem jeweiligen kurzen Schenkel weisenden Seite Rollen gelagert, die eine Lauffläche zur Abstützung des oberen Trums der Leitungsaufnahmeeinrichtung und an der zum langen Schenkel hinweisenden Seite ein Flanschteil zur seitlichen Führung des oberen Trums aufweisen. Aus einer nach außen gekippten Position der L-förmigen Träger, in der sie die Bewegung der Leitungsaufnahmeeinrichtung zwischen ihnen hindurch nicht behindern, werden die Träger durch Auflage des unteren Trums auf die aufeinander zuweisenden kurzen Schenkel in eine Position aufgerichtet, in der die Rolle zur Abstützung und Führung des oberen Trums wirken können. Werden bei Zurückbewegung des unteren Trums die kurzen Schenkel nicht mehr durch das Gewicht des unteren Trums beaufschlagt, so werden die L-förmigen Träger mit Hilfe von Federkräften wieder in die nach außen gekippte Position verschwenkt. Um das Auseinanderschwenken der Träger nach außen sicherzustellen, sind um die Rollen herum in Längsrichtung der Zeitungsaufnahmeeinrichtung Bügel vorgesehen, gegen die der Umlenkbogen der Leitungsaufnahmeeinrichtung anstoßen und dadurch ein Auseinanderschwenken der Träger bewirken kann.

Die Abstützung des unteren Trums der Leitungsaufnahmeeinrichtung erfolgt bei dieser bekannten Vorrichtung jedoch nur durch die etwa lineare Kontaktfläche mit den Rollen. Die seitliche Führung des oberen Trums ist ebenfalls auf die Kontaktflächen an den Flanschteilen der Rollen beschränkt. Die Abstützung und Führung ist davon abhängig, dass die Träger aufgrund des Gewichts des auf die kurzen Schenkel aufliegenden unteren Trums der Leitungsaufnahmeeinrichtung in der vertikal aufgerichteten Position gehalten werden. Bei relativ schnell verfahrbaren Leitungsaufnahmeeinrichtungen können aufgrund von Schwingungen vertikal nach oben gerichtete Kräfte auf das untere Trum ausgeübt werden, so dass eine sichere Abstützung und seitliche Führung des oberen Trums nicht immer gewährleistet werden kann.

Der vorliegenden Erfindung liegt die Aufgabe zugrunde, eine Führungsrinne der eingangs genannten Art so weiterzubilden, dass eine sichere, stabile und gleitende Abstützung und seitliche Führung des oberen Trums einer Leitungsaufnahmeeinrichtung, die verschleißarm ist, mit einfachen Mitteln gewährleistet wird.

Die Aufgabe wird erfindungsgemäß dadurch gelöst, dass bei einer Führungsrinne der eingangs genannten Art die Abstützvorrichtung als eine im Wesentlich flache Lauffläche an der Oberseite des Körpers ausgebildet ist und der Körper ausschließlich durch seine Schwerkraft und/oder durch Federkraft aus der zweiten Position, in der die Abstützvorrichtung nicht wesentlich über die innere Seitenfläche der betreffenden Seitenwand vorsteht, in die erste Position, in der die Abstützvorrichtung gegenüber der Seitenfläche ins Innere der Führungsrinne vorsteht, bewegbar ist und der Körper sich in der ersten Position durch eine Öffnung in der betreffenden Seitenwand der Führungsrinne erstreckt.

Dadurch, dass gemäß der Erfindung die Abstützvorrichtung an der Schaltvorrichtung, die ein Verschwenken der Abstützvorrichtung aus der zweiten Position in die erste Position bewirkt, ausgebildet ist, wird eine einfache, die Koppelung zwischen Schaltungs- und Abstützvorrichtung bewirkende Konstruktion erzielt. Die an der Oberseite des Körpers der Schaltvorrichtung ausgebildete im Wesentlichen flache Lauffläche für das obere Trum der Leitungsaufnahmeeinrichtung ergibt eine stabile, sichere und gleitende Führung des betreffenden Trums, die abriebs- und somit verschleißarm ist.

In einer bevorzugten Ausführung ist der Körper teilweise kegelstumpfförmig mit senkrecht zur betreffenden Seitenfläche verlaufender Symmetrieachse ausgebildet, wobei die Oberseite eine die Lauffläche bildende horizontal verlaufende Abflachung aufweist. Die flache Lauffläche ist zweckmäßigerweise im mittleren Bereich der Breite des Körpers angeordnet.

Die Abflachung sollte sich über mindestens die Hälfte der Breite des Körpers in Längsrichtung erstrecken. Besonders bevorzugt erstreckt sich die Abflachung über mindestens 2/3 der Breite des Körpers.

In dem nach unten weisenden Bereich des Körpers kann dieser ebenfalls etwa über die Breite der Abflachung der Oberseite abgeschnitten sein. Wesentlich für die Erfindung ist, dass an den beiden in Längsrichtung weisenden Seiten des Körpers Wölbungen oder zum Schwenkarm hin geneigte Flächen vorhanden sind, die durch Kontakt mit innen und außen liegenden Bereichen des Umlenkbogens der Leitungsaufnahmeeinrichtung ein Verschwenken des Körpers nach außen in die zweite Position bewirken.

Bei einer bevorzugten Weiterbildung der Körpergeometrie ist vorgesehen, dass die im Wesentlichen flache Lauffläche an der Oberseite des Körpers bogenförmig stetig in die benachbarten Bereiche der Körperoberfläche übergeht.

Um ein sicheres Verschwenken des Körpers zwischen der ersten und zweiten Position zu gewährleisten, ist die Schwenkachse des Schwenkarms bevorzugt in Längsrichtung der Führungsrinne außerhalb der betreffenden Seitenfläche und unterhalb des Körpers angeordnet. Die Schwerpunktlage des Körpers insbesondere in der nach außen geschwenkten, zweiten Position relativ zur Schwenkachse ist derart, dass der Körper durch sein Gewicht alleine und/oder durch eine gegebenenfalls unterstützende Federkraft in die ins Innere der Führungsrinne hineinragende, erste Position verschwenkt wird, wenn er von der Leitungsaufnahmeeinrichtung im Inneren der Führungsrinne nicht kontaktiert wird.

In einer anderen Ausführung kann die Schwenkachse auch oberhalb des Körpers angeordnet sein, um die zuvor beschriebene sichere Verschwenkung des Körpers aus der zweiten Position in die erste Position zu gewährleisten. Aus raumsparenden Gründen ist jedoch die Anordnung eines Schwenkarms und einer Schwenkachse oberhalb der Lauffläche des Körpers und der für diesen vorgesehenen Öffnung in der betreffenden Seitenwand unter Umständen ungünstig.

In einer bevorzugten Weiterbildung der Erfindung ist in dem Körper eine um eine senkrecht zur betreffenden Seitenwand verlaufende Achse drehbare Rolle angeordnet, wobei die Lauffläche an der Oberseite des Körpers eine Öffnung zum Durchtritt eines Bereichs der Rollenfläche aufweist, so dass dieser Bereich mit der Lauffläche an der Oberseite des Körpers eine im Wesentlichen durchgehende Lauffläche für das obere Trum der Leitungsaufnahmeeinrichtung bildet.

Der Körper kann als ein um den Umfang der Rolle angeordnetes Gehäuse ausgebildet sein. Die Geometrie des Gehäuses kann wie vorstehend in Bezug auf den Körper beschrieben gewählt sein.

Das Gehäuse kann im Bereich der nach innen weisenden Stirnseite der Rolle offen sein und über diese Stirnseite vorstehen.

Weiterhin kann der ins Innere der Führungsrinne weisende Rand des Gehäuses mit einer Krümmung zu einer parallel zur Stirnseite der Rolle verlaufenden Ebene versehen sein.

Bei einer bevorzugten Weiterbildung der Erfindung sind die Seitenwände der Führungsrinne plattenförmig ausgebildet. Aus Stabilitätsgründen sind die Seitenwände vorzugsweise aus Metall gefertigt, unter Umständen kommen jedoch auch Kunststoffplatten in Betracht.

Die Seitenwände können seitlich der Öffnungen für die Abstützvorrichtung angeordnete, sich quer zur Längsrichtung der Führungsrinne und nach Außen erstreckende plattenförmige Stützwände aufweisen, wobei die Schwenkarme für die Abstützvorrichtung durch zwei seitlich an dieser befestigte Schenkel gebildet sind, die an ihren freien Enden schwenkbar an den Stützwänden gelagert sind.

Die Unterseiten der Stützwände und die Unterseite jeder Seitenwand können durch eine Bodenplatte miteinander verbunden sein.

Die jeweils gegenüberliegenden Seitenwände können durch eine Bodentraverse miteinander verbunden sein, die an ihrer Oberseite eine Ablagefläche für das untere Trum der Leitungsaufnahmeeinrichtung aufweist.

In einer vorteilhaften Ausbildung der Erfindung kann die Führungsrinne mehrere in ihrer Längsrichtung voneinander beabstandete, jeweils gegenüberliegende Seitenwände mit jeweils einem die Abstützvorrichtung und Schaltvorrichtung aufweisenden Körper umfassen.

Bei dieser Ausführung erstrecken sich die Seitenwände jeweils zwischen ihren Stützwänden. Die Seitenwände können mit ihren Stützwänden als Formteile ausgebildet sein. Dabei gehen die Seitenwände durch geneigte oder gekrümmte Bereiche in ihre seitlichen Stützwände über.

Bei der aus mehreren in Längsrichtung beabstandeten Seitenwänden bestehenden Führungsrinne ist vorzugsweise an jeder Seite ein Führungsseitenteil mit L-förmig angeordneten Schenkeln vorgesehen, wobei der eine Schenkel sich längs der Innenseiten der Seitenwände und der andere Schenkel sich längs der Bodentraversen erstreckt und seitliche Führungen bzw. Ablageflächen für das untere Trum der Leitungsaufnahmeeinrichtung bilden.

Im Folgenden werden zwei Ausführungsbeispiele der Erfindung anhand der Zeichnung näher beschrieben.

In der Zeichnung zeigen:
- Fig. 1: eine perspektivische Ansicht einer Führungsrinne mit darin angeordneter Leitungsaufnahmeeinrichtung in drei möglichen Verfahrpositionen,
- Fig. 2: eine perspektivische Ansicht einer ersten Ausführung eines Seitenteils der in Fig. 1 dargestellten Führungsrinne, vom Inneren der Führungsrinne aus gesehen,
- Fig. 3: eine perspektivische Ansicht der in Fig. 2 dargestellten Ausführung des Seitenteils, von außerhalb der Führungsrinne her gesehen,
- Fig. 4: eine perspektivische Ansicht einer zweiten Ausführung eines Seitenteils einer Führungsrinne, vom Inneren der Führungsrinne gesehen,
- Fig. 5: eine perspektivische Ansicht der in Fig. 4 dargestellten Ausführung des Seitenteils der Führungsrinne, von außerhalb der Führungsrinne her gesehen,
- Fig. 6: eine perspektivische Ansicht auf einen Teilabschnitt einer Führungsrinne mit den in den Figuren 4 und 5 dargestellten Seitenteilen,
- Fig. 7: eine seitliche Ansicht des in Fig. 6 dargestellten Teilabschnitts der Führungsrinne,
- Fig. 8: eine Draufsicht auf den in Fig. 6 dargestellten Teilabschnitts der Führungsrinne und
- Fig. 9: eine stirnseitige Ansicht in Richtung des Pfeils B in Fig. 7.

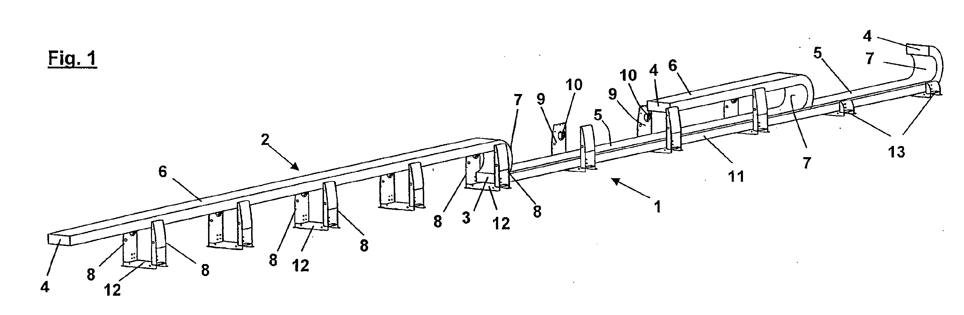

Fig. 1 zeigt eine Führungsrinne 1 für eine Leitungsaufnahmeeinrichtung 2, die sich zwischen einer stationären Anschlussstelle 3 und einer beweglichen Anschlussstelle 4 erstreckt und aus einem mit der stationären Anschlussstelle 3 verbindbaren unteren Trum 5 und einem mit der beweglichen Anschlussstelle 4 verbindbaren oberen Trum 6 besteht, wobei die beiden Trume 5 und 6 durch einen Umlenkbogen 7 miteinander verbunden sind.

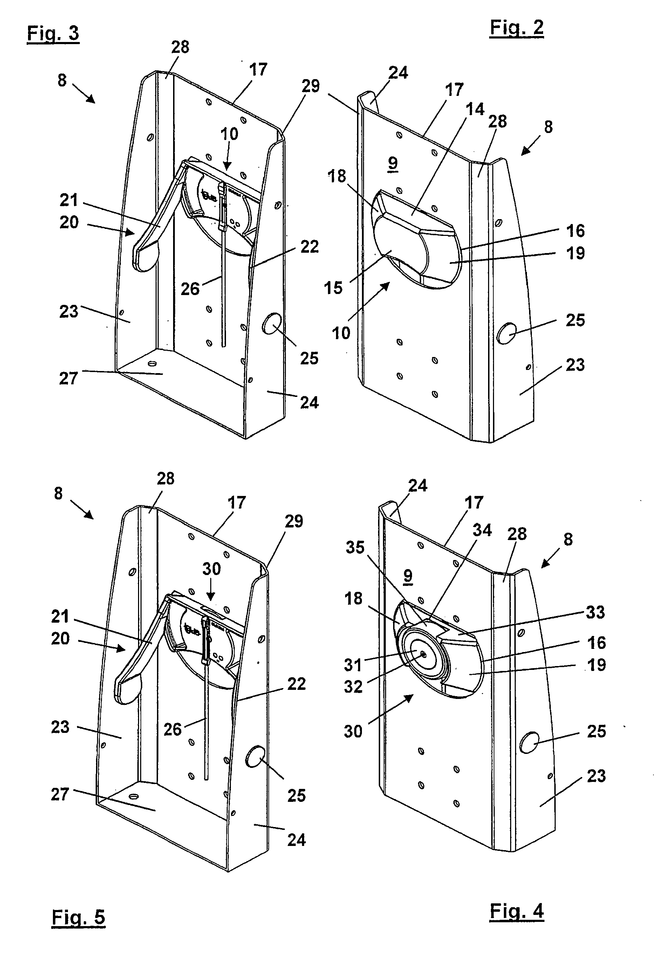

Die Führungsrinne 1 besteht aus einer Mehrzahl von Paaren quer zu ihrer Längsrichtung gegenüberliegenden Seitenteilen 8. Die Seitenteile 8 sind in zwei verschiedenen Ausführungsbeispielen in den Figuren 2 und 3 bzw. 4 und 5 detailliert dargestellt.

Wie allgemein aus Fig. 1 ersichtlich ist, weisen die Seitenteile 8 innen liegende Seitenflächen 9 zur Anlage seitlicher Bereiche der beiden Trume 5 und 6 und Abstützvorrichtungen 10 zur Abstützung und Führung des oberen Trums 6 in einem vertikalen Abstand zum unteren Trum 5 und über die stationäre Anschlussstelle 3 des unteren Trums 5 hinaus auf.

In Fig. 1 sind drei verschiedene Verfahrpositionen der Leitungsaufnahmeeinrichtung 2 im linken, mittleren und rechten Bereich dargestellt. Im rechten Bereich hat die Leitungsaufnahmeeinrichtung 2 ihre weiteste Verfahrposition in der betreffenden Richtung erreicht, so dass sie von der beweglichen Anschlussstelle 4 in den Umlenkbogen 7 und das maximal ausgefahrene untere Trum 5 übergeht. Das untere Trum 5 ist über seine gesamte Länge in an beiden Seiten der Führungsrinne 1 angeordneten Führungsseitenteilen 11 abgelegt. Die Führungsseitenteile 11 weisen L-förmig angeordnete Schenkel auf, wobei der eine Schenkel sich längs der Innenseiten der Seitenteile 8 und der andere Schenkel sich längs der zwischen den gegenüberliegenden Seitenteilen 8 erstreckenden Bodentraversen 12 erstreckt und seitliche Führungen bzw. Ablageflächen für das untere Trum 4 der Leitungsaufnahmeeinrichtung 2 bilden.

Außerhalb des Bereichs, in dem das obere Trum 6 abgestützt werden soll und die Seitenteile 8 mit den Abstützvorrichtungen 10 angeordnet sind (etwa mittlerer Bereich in Fig. 1), sind die Führungsseitenteile 11 an gegenüberliegend angeordneten Seitenteilhaltern 13 und diese verbindenden Bodenplatten 12 (rechter Bereich in Fig. 1) befestigt.

Wird die bewegliche Anschlussstelle 4 und damit die daran angeschlossene Leitungsaufnahmeeinrichtung 2 aus der in Fig. 1 rechts dargestellten maximalen Position nach links verfahren, wie weiter in der Mitte in Fig. 1 dargestellt, so kann sich das obere Trum 6 zwischen den Seitenteilen 8 auf den Abstützvorrichtungen 10 ablegen. In der in Fig. 1 dargestellten Position befindet sich der Umlenkbogen rechts außerhalb des ersten Paars gegenüberliegender Seitenteile 8. Wird die Leitungsaufnahmeeinrichtung 2 weiter nach links verfahren, gerät der Umlenkbogen 7 in Kontakt mit den ins Innere der Führungsrinne zwischen den gegenüberliegenden Seitenteilen 8 vorstehenden Abstützvorrichtungen 10. Durch eine besondere Ausbildung der Abstützvorrichtungen 10, die im Folgenden genauer anhand der Figuren 2 und 3 bzw. 4 und 5 beschrieben wird, werden die Abstützvorrichtungen 10 bei Kontakt mit dem Umlenkbogen 7 aus ihrer nach innen vorstehenden, ersten Position, in der sie die Abstützung des oberen Trums 6 bewirken, nach außen in eine zweite Position verschwenkt, in der sie nicht wesentlich über die inneren Seitenflächen 9 der betreffenden Seitenteile 8 nach innen vorstehen und die weitere Verfahrbewegung der Leitungsaufnahmeeinrichtung 2 nach links in Fig. 1 nicht behindern.

Nach dem Durchlaufen des Umlenkbogens 7 zwischen zwei gegenüberliegenden Seitenteilen 8 bewirkt ein Mechanismus, der unten anhand der Figuren 2 und 3 beschrieben wird, dass die Abstützvorrichtungen 10 aus ihrer zweiten Position wieder in ihre erste Position zurückgeschwenkt werden.

In der links in Fig. 1 dargestellten Position der Leitungsaufnahmeeinrichtung 2 hat die bewegliche Anschlussstelle 3 ihre weiteste Position links von der stationären Anschlussstelle 3 erreicht. Der Umlenkbogen 7 schließt sich unmittelbar an die stationäre Anschlussstelle 3 an, und das gesamte obere Trum bedarf der Abstützung durch Paare von gegenüberliegenden Seitenteilen 8 und die daran angeordneten Abstützvorrichtungen 10.

Wird die Leitungsaufnahmeeinrichtung 2 aus dieser Position wieder nach rechts verfahren, findet erneut ein Kontakt zwischen dem Umlenkbogen 7 und den Abstützvorrichtungen 10 an den rechts vom Umlenkbogen 7 angeordneten Paaren von Seitenteilen 8 statt. Durch den im Folgenden beschriebenen Mechanismus werden die Abstützvorrichtungen 10 bei diesem Kontakt wiederum aus ihrer ersten, zwischen den betreffenden Seitenteilen 8 vorstehenden Position nach außen in ihre zweite, im Wesentlichen nicht über die inneren Seitenflächen 9 der Seitenteile 8 vorstehende Position, in der sie die Verfahrbewegung des Umlenkbogens 7 nach rechts zwischen den Seitenteilen 8 hindurch nicht behindern, verschwenkt.

Wie aus den Figuren 2 und 3 hervorgeht, ist die Abstützvorrichtung 10 für das obere Trum der Leitungsaufnahmeeinrichtung als eine im Wesentlichen flache Lauffläche 14 an der Oberseite eines Körpers 15 ausgebildet, der sich in einer ersten Position, in der die Abstützvorrichtung 10 gegenüber der Seitenfläche 9 des Seitenteils 8 ins Innere der Führungsrinne vorsteht, durch eine Öffnung 16 in der Seitenwand des Seitenteils 8 hindurch erstreckt.

Der Körper 15 ist teilweise kegelstumpfförmig mit senkrecht zu der betreffenden Seitenfläche 9 verlaufender Symmetrieachse ausgebildet, mit einer die Lauffläche 14 bildenden Abflachung. Die Abflachung erstreckt sich im mittleren Bereich des Körpers etwa über drei Viertel seiner Breite in horizontaler Richtung. In dem nach unten weisenden Bereich des Körpers 15 ist dieser ebenfalls etwa über die Breite der Abflachung abgeschnitten. Wesentlich ist, dass an den beiden in horizontale Richtung weisenden Seiten des Körpers 15 zur Seitenfläche 9 hin geneigte Flächen 18 und 19 vorgesehen sind. Diese Flächen 18 und 19 kommen in Kontakt mit innen und außen liegenden Bereichen des Umlenkbogens der Leitungsaufnahmeeinrichtung und bewirken, wie im Folgenden anhand von Fig. 3 beschrieben wird, ein Verschwenken des Körpers 15 aus der in Fig. 2 gezeigten ersten Position in die zweite Position, in der der Körper 15 nicht mehr wesentlich über die innere Seitenfläche 9 der Seitenwand 17 vorsteht.

Wie aus Fig. 3 hervorgeht, ist der Körper 15 an einem Schwenkarm 20 außerhalb der inneren Seitenfläche der Seitenwand 17 schwenkbar gelagert. Der Schwenkarm 20 umfasst zwei Schenkel 21 und 22, die an ihren freien Enden schwenkbar an Stützwänden 23 bzw. 24 gelagert sind. Die Schwenkachse verläuft in Längsrichtung der Führungsrinne unterhalb des Körpers 15 mit Abstand zur Seitenwand 17. Zur Schwenklagerung weisen die Schenkel 21 und 22 an ihren freien Enden nach außen vorstehende Gelenkbolzen 25 auf, die in korrespondierenden Gelenköffnungen in den Stützwänden 23 bzw. 24 gelagert sind. Zum Einsetzen der Gelenkbolzen 25 in die Gelenköffnungen werden die Schenkel 21 und 22 des Schwenkarms 20 leicht zusammengedrückt, so dass die Gelenkbolzen 25 in die Gelenköffnungen einrasten können.

Die Schwerpunktlage des Körpers 15 relativ zur Gelenkachse ist insbesondere in der zweiten Position, in der der Körper 15 so weit nach außen geschwenkt ist, dass er an der Seitenfläche 9 der Seitenwand 17 nicht mehr vorsteht, derart, dass der Körper durch sein Gewicht alleine in die ins Innere der Führungsrinne hineinragende, in den Figuren 2 und 3 gezeigten ersten Position verschwenkt wird, wenn er vom Umlenkbogen der Leitungsaufnahmeeinrichtung im Inneren der Führungsrinne nicht kontaktiert wird. Zur Begrenzung des Verschwenkwinkels nach außen hin und Unterstützung der nach innen gerichteten Verschwenkung dient eine an der Außenseite der Seitenwand 17 angeordnete Stabfeder 26.

Wie ebenfalls aus Fig. 3 hervorgeht, sind die Unterseiten der Stützwände 23 und 24 und die Unterseite der Seitenwand 17 durch eine Bodenplatte 27 miteinander verbunden. Die Seitenwand 17 mit den seitlichen Stützwänden 23 und 24 und der Bodenplatte 27 sind als ein Formteil aus Metall hergestellt.. Dabei geht die Seitenwand 17 durch geneigte Bereiche 28 und 29 in die Stützwände 23 und 24 über.

Die Figuren 4 und 5 zeigen ein zweites Ausführungsbeispiel einer Abstützvorrichtung 10, bei der der Körper 15 so ausgebildet ist, dass er eine in einem Gehäuse 30 angeordnete Rolle 31 aufweist. Die Rolle 31 ist um eine senkrecht zur Seitenwand 17 verlaufende Achse 32 gelagert. Das Gehäuse 30 weist an seiner Oberseite eine die Lauffläche 14 des Körpers 15 in Fig. 2 teilweise bildende Abflachung 33 auf, die in ihrem mittleren Bereich mit einer Öffnung 34 versehen ist, durch die ein Bereich 35 der Rollenfläche durchtritt. Dieser Bereich 35 bildet mit der Abflachung 33 des Gehäuses 30 eine im Wesentlichen durchgehende Lauffläche für das obere Trum der Leitungsaufnahmeeinrichtung.

Die weitere Geometrie des Gehäuses 30 entspricht derjenigen des Körpers 15 in Fig. 2. Das Gehäuse 30 ist im Bereich der nach innen weisenden Stirnseite der Rolle 31 offen und steht zum Schutz der Rolle 31 geringfügig über die Stirnseite vor. Der ins Innere der Führungsrinne weisende Rand des Gehäuses um die Öffnung herum ist mit einer Abflachung zu einer parallel zur Stirnseite der Rolle 31 verlaufenden Ebene versehen. Die Abflachung 33 an der Oberseite des Gehäuses 30 geht ebenfalls mit einer Abflachung im Wesentlichen stetig in die seitlichen Flächen 18 und 19 über, so dass sich eventuell auf der Lauffläche ansammelnder Schmutz ohne zu starken Abrieb des das darauf laufenden oberen Trums seitlich besser abrutschen kann.

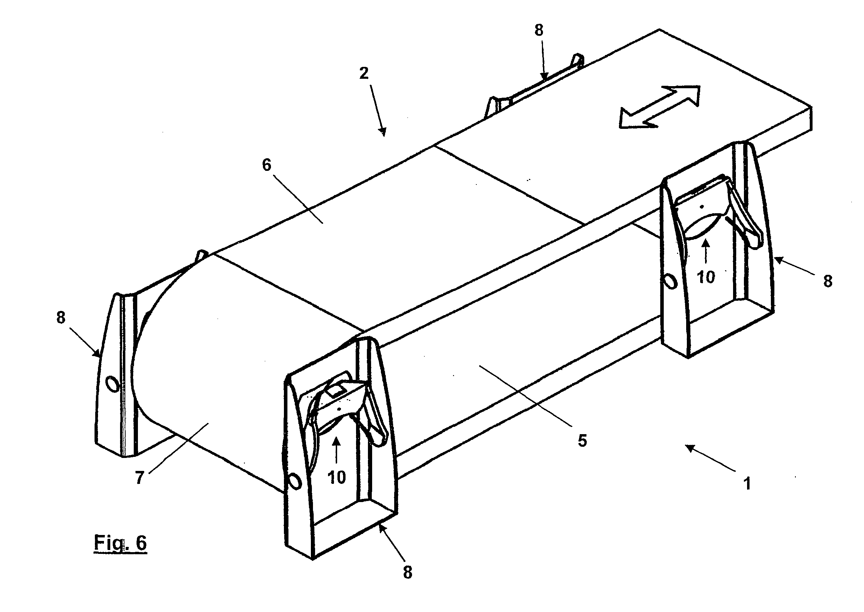

Fig. 6 zeigt noch einmal einen Teilabschnitt der Führungsrinne 1, in dem sich ein Teil des oberen Trums 6, der Umlenkbogen 7 und ein Teil des unteren Trums 5 der Leitungsaufnahmeeinrichtung 2 befinden. Der Teilabschnitt der Führungsrinne 1 besteht aus zwei Paaren gegenüberliegender Seitenteile 8, die der in den Figuren 4 und 5 dargestellten Ausführung entsprechen.

Bei dem in Fig. 6 rechts dargestellten Paar von Seitenteilen 8 befindet sich die Abstützvorrichtung 10 in der ins Innere der Führungsrinne 1 vorstehenden ersten Position zur Abstützung des oberen Trums 2. Bei dem in Fig. 6 links dargestellten Paar von Seitenteilen 8 befindet sich die Abstützvorrichtung 10 in der nach außen geschwenkten, zweiten Position, in der sie durch Bereiche des Umlenkbogens 7 der Leitungsaufnahmeeinrichtung 2 kontaktiert werden. Vor und nach dem Kontakt durch betreffende Bereiche des Umlenkbogens 7 sind die Abstützvorrichtungen 10 in ihre erste Position, wie diejenigen der in Fig. 6 rechts dargestellten Seitenteile 8, eingeschwenkt und bewirken zwischen den beiden Trumen eine Abstützung des oberen Trums 6.

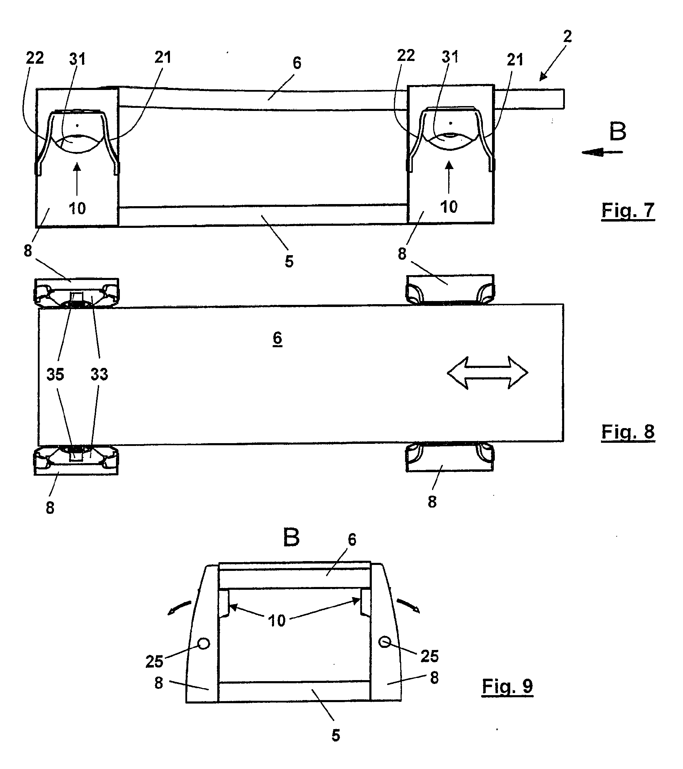

Fig. 7 zeigt eine seitliche Ansicht des in Fig. 6 dargestellten Teilbereichs der Führungsrinne 1 von rechts, und Fig. 8 eine Draufsicht von oben, aus der die unterschiedlichen Schwenkpositionen der Abstützvorrichtungen 10 der Seitenteile 8 noch einmal hervorgehen.

Fig. 9 zeigt eine stirnseitige Ansicht in Richtung des Pfeils B in Fig. 7, wobei die seitlichen Pfeile 36 die Verschwenkrichtungen der gegenüberliegenden Abstützvorrichtungen 10 aus der ersten, das Obertrum 2 abstützenden Position in die zweite, die Bewegungsbahn des Umlenkbogens 2 freigebende Position darstellen.

### Bezugzeichenliste

- 1: Führungsrinne
- 2: Leitungsaufnahmeeinrichtung
- 3: stationäre Anschlussstelle
- 4: bewegliche Anschlussstelle
- 5: unteres Trum
- 6: oberes Trum
- 7: Umlenkbogen
- 8: Seitenteil
- 9: Seitenfläche
- 10: Abstützvorrichtung
- 11: Führungsseitenteil
- 12: Bodentraverse
- 13: Seitenteilhalter
- 14: Lauffläche
- 15: Körper
- 16: Öffnung
- 17: Seitenwand
- 18: Fläche
- 19: Fläche
- 20: Schwenkarm
- 21: Schenkel
- 22: Schenkel
- 23: Stützwand
- 24: Stützwand
- 25: Gelenkbolzen
- 26: Stabfeder
- 27: Bodenplatte
- 28: geneigter Bereich
- 29: geneigter Bereich
- 30: Gehäuse
- 31: Rolle
- 32: Achse
- 33: Ablfachung
- 34: Öffnung
- 35: Bereich
- 36: Pfeil

## Patentansprüche

1. Führungsrinne (1) für eine Leitungsaufnahmeeinrichtung (2), die sich zwischen einer stationären Anschlussstelle (3) und einer beweglichen Anschlussstelle (4) erstreckt und aus einem mit der stationären Anschlussstelle (3) verbindbaren unteren Trum (5) und einem mit der beweglichen Anschlussstelle (4) verbindbaren oberen Trum (6), die durch einen Umlenkbogen (7) miteinander verbunden sind, besteht, wobei die Führungsrinne (1) zwei gegenüberliegende vertikal feststehende Seitenwände (17) mit innen liegenden Seitenflächen (9) zur Anlage seitlicher Bereiche der beiden Trume (5, 6) aufweist und an den gegenüberliegenden Seitenwänden (17) jeweils mindestens eine Abstützvorrichtung (10) zur Abstützung und Führung des oberen Trums (6) angeordnet ist, die zwischen einer ersten Position, in der sie gegenüber der Seitenfläche (9) ins Innere der Führungsrinne (1) vorsteht und als Abstützung des oberen Trums (6) wirkt, und einer zweiten Position, in der sie nicht wesentlich über die innere Seitenfläche (9) der betreffenden Seitenwand (17) vorsteht und nicht als Abstützung des oberen Trums (6) wirkt, bewegbar ist, und eine in den Verfahrweg der Leitungsaufnahmeeinrichtung (2) hinein bewegbare Schaltvorrichtung in Form eines Körpers (15) vorgesehen ist, der an einem Schwenkarm (20) außerhalb der inneren Seitenfläche (9) der betreffenden Seitenwand (17) schwenkbar gelagert ist und an seinen beiden in Längsrichtung der Führungsrinne (1) weisenden Seiten vom Inneren der Führungsrinne (1) nach außen hin verbreitert ist und der durch Kontakt dieser Seiten mit innen und außen liegenden Bereichen des Umlenkbogens 7 der Leitungsaufnahmeeinrichtung (2) in eine Position bewegbar ist, in der er nicht wesentlich über die innere Seitenfläche (9) der betreffenden Seitenwand (17) vorsteht und die weitere Verfahrbewegung der Leitungsaufnahmeeinrichtung (2) nicht behindert, und mit der Abstützvorrichtung (10) so gekoppelt ist, dass diese von einer der beiden Positionen in die andere bewegbar ist, **dadurch gekennzeichnet, dass** die Abstützvorrichtung (10) als eine im Wesentlichen flache Lauffläche (14) an der Oberseite des Körpers (15) ausgebildet ist und der Körper (15) ausschließlich durch seine Schwerkraft und/oder durch Federkraft aus der zweiten Position, in der die Abstützvorrichtung (10) nicht wesentlich über die innere Seitenfläche (9) der betreffenden Seitenwand (17) vorsteht, in die erste Position, in der die Abstützvorrichtung (10) gegenüber der Seitenfläche (9) ins Innere der Führungsrinne (1) vorsteht, bewegbar ist und der Körper (15) sich in der ersten Position durch eine Öffnung (16) in der betreffenden Seitenwand (17) der Führungsrinne (1) erstreckt.

2. Führungsrinne nach Anspruch 1, **dadurch ge- kennzeichnet, dass** der Körper (15) teilweise kegelstumpfförmig mit senkrecht zur betreffenden Seitenfläche (9) verlaufender Symmetrieachse ausgebildet ist, wobei die Oberseite eine die Lauffläche (14) bildende horizontal verlaufende Abflachung aufweist.

3. Führungsrinne nach Anspruch 2, **dadurch ge- kennzeichnet, dass** sich die Abflachung über mindestens die Hälfte der Breite des Körpers (15) in Längsrichtung erstreckt.

4. Führungsrinne nach einem der Ansprüche 1 bis 3, **dadurch gekennzeichnet, dass** die im Wesentlichen flache Lauffläche (14) an der Oberseite des Körpers (15) flächig geneigt oder bogenförmig stetig in die benachbarten Bereiche der Körperoberfläche übergeht.

5. Führungsrinne nach einem der Ansprüche 1 bis 4, **dadurch gekennzeichnet, dass** die Schwenkachse des Schwenkarms (20) in Längsrichtung der Führungsrinne (1) außerhalb der betreffenden Seitenfläche (9) und unterhalb des Körpers (15) angeordnet ist.

6. Führungsrinne nach einem der Ansprüche 1 bis 5, **dadurch gekennzeichnet, dass** in dem Körper (15) eine um eine senkrecht zur betreffenden Seitenwand (17) verlaufende Achse drehbare Rolle (31) angeordnet ist, wobei die Lauffläche (14) an der Oberseite des Körpers (15) eine Öffnung (16) zum Durchtritt eines Bereichs (35) der Rollenfläche aufweist, so dass dieser Bereich (35) mit der Lauffläche (14) an der Oberseite des Körpers (15) eine im Wesentlichen durchgehende Lauffläche für das obere Trum (6) der Leitungsaufnahmeeinrichtung (2) bildet.

7. Führungsrinne nach Anspruch 6, **dadurch ge- kennzeichnet, dass** der Körper (15) als ein um den Umfang der Rolle (31) angeordnetes Gehäuse (30) ausgebildet ist.

8. Führungsrinne nach Anspruch 7, **dadurch ge- kennzeichnet, dass** das Gehäuse (30) im Bereich der nach innen weisenden Stirnseite der Rolle (31) offen ist und über diese Stirnseite vorsteht.

9. Führungsrinne nach Anspruch 7 oder 8, **dadurch gekennzeichnet, dass** der ins Innere der Führungsrinne (1) weisende Rand des Gehäuses (30) mit einer geneigten Fläche oder Krümmung zu einer parallel zur Stirnseite der Rolle (31) verlaufenden Ebene versehen ist.

10. Führungsrinne nach einem der Ansprüche 1 bis 9, **da- durch gekennzeichnet, dass** die Seitenwände (17) seitlich der Öffnungen (16) für die Abstützvorrichtung (10) angeordnete, sich quer zur Längsrichtung der Führungsrinne (1) und nach außen erstreckende plattenförmige Stützwände (23, 24) aufweisen, wobei die Schwenkarme (20) für die Abstützvorrichtung (10) durch zwei seitlich an dieser befestigte Schenkel (21, 22) gebildet sind, die an ihren freien Enden schwenkbar an den Stützwänden (23, 24) gelagert sind.

11. Führungsrinne nach Anspruch 10, **dadurch ge- kennzeichnet, dass** die Unterseiten der Stützwände (23, 24) und die Unterseite jeder Seitenwand (17) durch eine Bodenplatte (27) miteinander verbunden sind.

12. Führungsrinne nach einem der Ansprüche 1 bis 11, **dadurch gekennzeichnet, dass** die jeweils gegenüberliegenden Seitenwände (17) durch eine Bodentraverse (12) miteinander verbunden sind.

13. Führungsrinne nach einem der Ansprüche 1 bis 12, **dadurch gekennzeichnet, dass** sie mehrere in ihrer Längsrichtung voneinander beabstandete, jeweils gegenüberliegende Seitenwände (17) mit jeweils einem die Abstützvorrichtung (10) und Schaltvorrichtung aufweisenden Körper (15) umfasst.

14. Führungsrinne nach Anspruch 13, **dadurch ge- kennzeichnet, dass** die Seitenwände (17) sich jeweils zwischen ihren Stützwänden (23, 24) erstrecken und durch geneigte oder gekrümmte Bereiche (28, 29) in ihre seitlichen Stützwände (23, 24) übergehen.

15. Führungsrinne nach Anspruch 13 oder 14, **dadurch gekennzeichnet, dass** sie in ihrem Bereich, in dem das untere Trum (5) der Leitungsaufnahmeeinrichtung (2) ablegbar ist, an jeder Seite ein Führungsseitenteil (11) mit L-förmig angeordneten Schenkeln aufweist, wobei der eine Schenkel sich längs der Innenseite der Seitenwände (17) und der andere Schenkel sich senkrecht zu den Seitenwänden (17) ins Innere der Führungsrinne (1) erstreckt und seitliche Führungen bzw. Ablageflächen für das untere Trum (5) der Leitungsaufnahmeeinrichtung (2) bilden.

## Claims

1. Guide conduit (1) for a cable receptacle (2) which extends between a stationary connecting point (3) and a movable connecting point (4) and which consists of a lower strand (5) connectible to the stationary connecting point (3) and an upper strand (6) connectible to the movable connecting point (4), the strands being connected to each other by a redirection bow (7), wherein the guide conduit (1) includes two opposite vertically fixed lateral walls (17) with inner lateral surfaces for the contact with lateral regions of the two strands (5, 6), and wherein at least one support device (10) for supporting and guiding the upper strand (6) is arranged on each of the opposite lateral walls (17) and is movable between a first position in which it protrudes into the interior of the guide conduit (1) with respect to the lateral surface (9) and acts as a support of the upper strand (6), and a second position in which it does not protrude significantly over the inner lateral surface (9) of the respective lateral wall (17) and does not act as a support of the upper strand (6), and wherein the guide conduit includes a switching device in the form of a body (15) that can be moved into the path of travel of the cable receptacle (2), the body (15) being supported for pivoting on a pivot arm (20) outside of the inner lateral surface (9) of the respective lateral wall (17) and being enlarged outwardly from the interior of the guide conduit (1) on its two sides pointing in the longitudinal direction of the guide conduit (1) and being movable by the contact of these sides with inner and outer regions of the redirection bow (7) of the cable receptacle (2) to a position in which it does not significantly protrude over the inner lateral surface (9) of the respective lateral wall (17) and in which it does not impede the continued travel of the cable receptacle (2), and being coupled to the support device (10) in such a manner that the same is movable from one of the two positions to the other, ***characterized* in that** the support device (10) is formed as a substantially flat running surface (14) on the top side of the body (15) and that the body (15) is moved solely by its gravity and/or by spring force from the second position, in which the support device (10) does not significantly protrude over the inner lateral surface (9) of the respective lateral wall (17), to the first position in which the support device (10) protrudes into the interior of the guide conduit (1) with respect to the lateral surface (9), and the body (15) in the first position extends through an opening (16) in the respective lateral wall (17) of the guide conduit (1).

2. Guide conduit according to claim 1, ***characterized* in that** body (15) is partly formed as a truncated cone with the axis of symmetry extending vertically to the respective lateral surface (9), the top side including a horizontally extending flattening that forms a running surface (14).

3. Guide conduit according to claim 2, ***characterized* in that** the flattening extends at least over the half of the width of the body (15) in the longitudinal direction.

4. Guide conduit according to one of the claims 1 to 3, ***characterized* in that** the substantially flat running surface (14) on the top side of the body (15) continuously merges into the adjacent regions of the body surface in a two-dimensionally inclined or curved manner.

5. Guide conduit according to one of the claims 1 to 4, ***characterized* in that** the pivot axis of the pivot arm (20) is arranged in the longitudinal direction of the guide conduit (1) outside of the respective lateral surface (9) and below the body (15).

6. Guide conduit according to one of the claims 1 to 5, ***characterized* in that** in the body (15) a roller (31) is arranged which is rotatable about an axis extending vertically to the respective lateral wall (17), the running surface (14) on the top side of the body (15) having an opening (16) for the passage of a part (35) of the roller surface so that this part (35) together with the running surface (14) on the top side of the body (15) forms a substantially continuous running surface for the upper strand (6) of the cable receptacle (2).

7. Guide conduit according to claim 6, ***characterized* in that** the body (15) is formed as a housing (30) arranged around the circumference of the roller (31).

8. Guide conduit according to claim 7, ***characterized* in that** the housing (30) is open in the region of the inwardly facing front side of the roller (31) and protrudes over this front side.

9. Guide conduit according to claim 7 or 8, ***characterized* in that** rim of the housing (30) pointing to the interior of the guide conduit (1) is provided with an inclined surface or with a curvature with respect to a plane running parallel to the front side of the roller (31).

10. Guide conduit according to one of the claims 1 to 9, ***characterized* in that** the lateral walls (17) include plate-shaped supporting walls (23, 24) disposed laterally of the openings (16) for the support device (10) and extending outwardly and transversely to the longitudinal direction of the guide conduit (1), the pivot arms (20) for the support device (10) being formed by two legs (21, 22) which are laterally fixed on the supporting device and which are pivotably supported at the free ends thereof on the supporting walls (23, 24).

11. Guide conduit according to claim 10, ***characterized* in that** the bottoms of the supporting walls (23, 24) and the bottom of each lateral wall (17) are connected to each other by a bottom plate (27).

12. Guide conduit according to one of the claims 1 to 11, ***characterized* in that** the respectively opposite lateral walls (17) are connected to each other by a bottom cross member (12).

13. Guide conduit according to one of the claims 1 to 12, ***characterized* in that** it comprises several mutually opposite lateral walls (17) spaced from each other in the longitudinal direction, each with a body (15) which comprises the support device (10) and the switching device.

14. Guide conduit according to claim 13, ***characterized* in that** the lateral walls (17) each extend between their supporting walls (23, 24)and merge into their lateral supporting walls (23, 24) via inclined or curved regions (28, 29).

15. Guide conduit according to claim 13 or 14, ***characterized* in that** in its region in which the upper strand (5) of the cable receptacle can be supported, the guide conduit comprises on each side thereof a guide side member (11) with legs arranged in an L-shape, one leg extending along the inside of the lateral walls (17) and the other leg extending vertically to the lateral walls (17) and into the interior of the guide conduit (1), and the legs forming lateral guide or support surfaces for the lower strand (5) of the cable receptacle (2).

## Revendications

1. Conduit de guidage (1) pour un porte-câble (2) s'étendant entre un point de raccordement stationnaire (3) et un point de raccordement mobile (4) et se composant d'une partie inférieure (5) connectable au point de raccordement stationnaire (3) et d'une partie supérieure (6) connectable au point de raccordement mobile (4), lesdites parties étant reliées par un coude de renvoi (7), ledit conduit de guidage (1) présentant deux parois latérales (17) opposées et fixées verticalement et avec des côtés intérieurs (9) pour la butée des parties latérales des deux parties (5, 6), et au moins un dispositif de support (10) pour supporter et guider ladite partie supérieure (6) étant disposé sur chacune des parois latérales (17) opposées, ledit dispositif de support étant mobile entre une première position à laquelle il fait saillie vers l'intérieur du conduit de guidage (1) par rapport au côté (9) en agissant comme support de la partie supérieure (6), et une deuxième position à laquelle il ne fait pas saille sur le côté intérieur (9) dans une mesure notable et n'agissant pas comme support de la partie supérieure, et comprenant un dispositif de commutation en forme d'un corps (15) prévu de sorte que ledit dispositif de commutation peut être mu dans le course de déplacement du porte-câble (2), ledit corps (15) étant supporté de manière pivotable sur un bras pivotant à l'extérieur du côté intérieur (9) de la paroi latérale (17) respective et étant élargi sur ses deux côtés montrant vers la direction longitudinale du conduit de guidage (1) de l'intérieur vers l'extérieur de celui-ci, et le corps, par le contact de ces côtés avec des zones intérieures et extérieures du coude de renvoi (7) du porte-câble (2), étant déplaçable vers une position dans laquelle il ne fait pas saillie dans une mesure notable sur le côté intérieur (9) de la paroi latérale (17) respective et n'empêche pas le déplacement ultérieur du porte-câble (2), et étant couplé au dispositif de support (10) de sorte que celui-ci peut être déplacé de l'une des deux positions à l'autre, ***caractérisé* en ce que** le dispositif de support (10) est formé comme une surface de roulement (14) sensiblement plate sur la face supérieure du corps (15), et le corps (15) peut être déplacé de la deuxième position, à laquelle le dispositif de support ne fait pas saillie sur le côté intérieur (9) de la surface latérale (17) dans une mesure notable, à la première position, à laquelle le dispositif de support fait saillie dans l'intérieur du conduit de guidage (1) par rapport au côté (9), exclusivement par sa pesanteur et/ou sa force de ressort, et le corps (15), à la première position, s'étendant au travers d'une orifice (16) dans la paroi latérale (17) respective du conduit de guidage (1).

2. Conduit de guidage selon la revendication 1, ***caractérisé* en ce que** le corps (15) est tronconique, au moins en partie, avec un axe de symétrie s'étendant verticalement par rapport au côté (9) respectif, la face supérieure présentant un méplat horizontal formant la surface de roulement (14).

3. Conduit de guidage selon la revendication 2, ***caractérisé* en ce que** le méplat s'étend sur au moins la moitié de la largeur du corps (15) en la direction longitudinale.

4. Conduit de guidage selon l'une des revendications 1 à 3, ***caractérisé* en ce que** la surface de roulement (14) sensiblement plate sur la face supérieure du corps (15) est inclinée d'une manière plate ou est en continuité avec des parties adjacentes de la surface du corps d'une manière arquée et continue.

5. Conduit de guidage selon l'une des revendications 1 à 4, ***caractérisé* en ce que** l'axe de pivotement du bras pivotant (20) est disposé à l'extérieur du côté (9) respectif et au-dessous du corps (15), en la direction longitudinale du conduit de guidage.

6. Conduit de guidage selon l'une des revendications 1 à 5, ***caractérisé* en ce que** dans le corps (15) est disposé un rouleau (31) pour une rotation autour d'un axe s'étendant verticalement par rapport à la face latérale (17) respective, la surface de roulement (14) sur la face supérieure du corps (15) présentant une orifice (16) pour le passage d'une partie (35) de la surface de roulement, de sorte que cette partie (35) ensemble avec la surface de roulement (14) sur la face supérieure du corps (15) forme une surface de roulement sensiblement continue pour la partie supérieure (6) du porte-câble (2).

7. Conduit de guidage selon la revendication 6, ***caractérisé* en ce que** le corps (15) est formé comme une boîte (30) disposée autour la circonférence du rouleau (31).

8. Conduit de guidage selon la revendication 7, ***caractérisé* en ce que**, dans la zone du front du rouleau (31) montrant vers l'intérieur, la boîte (30) est ouverte est fait saillie sur ce front.

9. Conduit de guidage selon les revendications 7 ou 8, ***caractérisé* en ce que** le bord de la boîte (30) montrant vers l'intérieur du conduit de guidage (1) est pourvu d'une surface inclinée ou d'une courbure par rapport à un plan s'étendant de manière parallèle au front du rouleau (31).

10. Conduit de guidage selon l'une des revendications 1 à 9, ***caractérisé* en ce que** les parois latérales (17) présentent, latéralement par rapport aux orifices (16), des parois de support en plate-forme (23, 24) disposées pour le dispositif de support (10) et s'étendant transversalement par rapport à la direction longitudinale du conduit de guidage (1) et vers l'extérieur, les bras pivotant (20) pour le dispositif de support (10) étant formés par deux branches (21, 22) fixées latéralement audit dispositif de support (10), lesdites branches à ses extrémités libres étant supportées sur les parois de support (23, 24) de manière pivotante.

11. Conduit de guidage selon la revendication 10, ***caractérisé* en ce que** les faces inférieures des parois latérales (23, 24) et la face inférieure de chaque parois latérale (17) sont reliées l'une à l'autre par une plaque de fond (27).

12. Conduit de guidage selon l'une des revendications 1 à 11, ***caractérisé* en ce que** les parois (17) respectivement opposées sont reliées l'une à l'autre par une traverse de fond (12).

13. Conduit de guidage selon l'une des revendications 1 à 12, ***caractérisé* en ce qu'**il comprend plusieurs parois latérales (17) respectivement opposées et distantes les unes de les autres, chacune d'eux comprenant un corps (15) qui comporte le dispositif de support (10) et le dispositif de commutation.

14. Conduit de guidage selon la revendication 13, ***caractérisé* en ce que** les parois latérales (17) s'étendent entre ses parois de support (23, 24) respectives et sont en continuité avec ses parois de support (23, 24) latérales par des parties inclinées ou courbées (28, 29).

15. Conduit de guidage selon la revendication 13 ou 14, ***caractérisé* en ce qu'**il présente, dans sa zone où peut être mu au rebut la partie inférieure (5) du porte-câble (2) et sur chaque côté, un élément latéral de guidage (11) avec des branches disposées en forme de L, l'une des branches s'étendant le long de la face intérieure des parois latérales (17) et l'autre branche s'étendant verticalement aux parois latérales (17) et dans l'intérieur du conduit de guidage (1) et formant des conduites latérales ou des surfaces de mise au rebut pour la partie inférieure (5) du porte-câble (2).
